# EUROPÄISCHE PATENTANMELDUNG

(11) **EP 3 273 555 A1**
(43) Veröffentlichungstag der Anmeldung: **24.01.2018**
(21) Anmeldenummer: 16180580.9
(22) Anmeldetag: 21.07.2016
(51) Int. Cl.: H02B 1/30, F25D 29/00, F21V 8/00, H05K 5/02

(54) **SCHALTSCHRANK MIT PROJEKTOR UND NÄHERUNGSSENSOR**

(71) Anmelder: Siemens Aktiengesellschaft, 80333 München (DE)
(72) Erfinder: Meraviglia, Dario, 91325 Adelsdorf (DE); Meyer, Arne, 91052 Erlangen (DE)

(57) **Zusammenfassung**

Die Erfindung betrifft einen Schaltschrank (1). Zur Verbessrung des Schaltschrankes (1) wird vorgeschlagen, dass der Schaltschrank (1) einen Projektor (2) und einen Näherungssensor (3) aufweist, wobei der Projektor (2) derart am Schaltschrank (1) befestigt ist, dass mittels des Projektors (2) eine Darstellung (21) an eine Oberfläche des Schaltschranks (1) projizierbar ist, wobei der Näherungssensor (3) derart am Schaltschrank (1) befestigt ist, dass eine Berührung der Oberfläche des Schaltschranks (1) im Bereich der Darstellung (21) mittels des Näherungssensors (3) erkennbar ist. Die Erfindung betrifft weiter einen Stromrichter (4) mit einem solchen Schaltschrank (1). Ferner betrifft die Erfindung ein Verfahren zum Betrieb eines solchen Schaltschrankes (1) oder eines solchen Stromrichters (4), wobei mittels des Projektors (2) eine Darstellung (21) an die Oberfläche des Schaltschranks (1) projiziert wird, wobei mittels einer Berührung oder einer Sequenz von Berührungen von Teilen der Oberfläche des Schaltschranke (1) im Bereich der Darstellung (21) eine oder mehrere Eingabeinformationen aufgenommen werden.

## Beschreibung

Die Erfindung betrifft einen Schaltschrank. Weiter betrifft die Erfindung einen Stromrichter mit einem solchen Schaltschrank. Ferner betrifft die Erfindung ein Verfahren zum Betrieb eines solchen Schaltschranks oder eines solchen Stromrichters.

Schaltschränke dienen dazu, elektrische oder elektronische Komponenten sicher unterzubringen. Sie dienen insbesondere dazu, diese Komponenten vor Umwelteinflüssen wie beispielsweise Wasser oder Verschmutzung zu schützen. Ebenso gewährleisten sie einen Berührschutz, der die Gefahr eines elektrischen Schlages bei Berührung der Komponenten zuverlässig verhindert.

Stromrichter, auch als Frequenzumrichter bezeichnet, werden in der Regel über Bedienpanels, die meistens fest in der Schranktür eingebaut sind, in Betrieb genommen. Mit Hilfe von Bedienpanels werden außerdem Wartungsaktivitäten durchgeführt. Bedienpanels bieten darüber hinaus dem Anwender eine graphische Schnittstelle um Diagnoseinformationen anzuzeigen. Außerdem ermöglichen Bedienpanels dem Anwender die Eingabe von Daten, um den Frequenzumrichter zu parametrieren und zu konfigurieren.

Bedienpanels umfassen unter anderem ein Gehäuse und ein Display, um die für die Industrie erforderliche Schutzart umzusetzen und die graphische Schnittstelle zu realisieren.

Der Erfindung liegt die Aufgabe zugrunde, einen Schaltschrank zu verbessern.

Diese Aufgabe wird durch Schaltschrank mit einem Projektor und einem Näherungssensor gelöst, wobei der Projektor derart am Schaltschrank befestigt ist, dass mittels des Projektors eine Darstellung an eine Oberfläche des Schaltschranks projizierbar ist, wobei der Näherungssensor derart am Schaltschrank befestigt ist, dass eine Berührung der Oberfläche des Schaltschranks im Bereich der Darstellung mittels des Näherungssensors erkennbar ist. Ferner wird die Aufgabe durch einen Stromrichter mit einem solchen Schaltschrank gelöst. Weiter wird die Aufgabe durch ein Verfahren zum Betrieb eines solchen Schaltschranks oder eines solchen Stromrichters gelöst, wobei mittels des Projektors eine Darstellung an die Oberfläche des Schaltschranks projiziert wird, wobei mittels einer Berührung oder einer Sequenz von Berührungen von Teilen der Oberfläche des Schaltschranks im Bereich der Darstellung eine oder mehrere Eingabeinformationen aufgenommen werden.

Der Erfindung liegt die Erkenntnis zugrunde, dass sich der Schaltschrank dadurch verbessern lässt, dass das vorhandene Display mit seinem Display-Panel durch eine Projektion ersetzen lässt. Dazu wird ein Projektor derart am Schaltschrank befestigt, dass von diesem eine Darstellung, beispielsweise in Form einer grafischen Oberfläche, wie beispielsweise grafische Bedienelemente, oder eines Textes auf die Oberfläche des Schaltschrankes projiziert wird. Gleichzeitig weist der Schaltschrank einen Näherungssensor auf. Mit dem Näherungssensor ist es möglich, eine Berührung des Schaltschrankes beispielsweise durch einen Bediener im Bereich der projizierten Darstellung zu erfassen. Und in einen Steuerbefehl umzuwandeln. Die Bedienung erfolgt dann beispielsweise über einen Proximity Sensor, der die Hand- und/oder Finger-Bewegung als Input für die Dateneingabe übersetzen. Damit können die Komponenten im Innern des Schaltschrankes beispielsweise parametriert, programmiert oder analysiert werden. Dabei kann die Bedienung aufgrund einer Berührung oder einer Sequenz von Berührungen, auch als Abfolge von Berührungen bezeichnet, erfolgen, bei denen Teile der projizierten Darstellung an der Oberfläche des Schaltschranks oder Stromrichters berührt werden.

Dabei kann der Projektor an der Außenseite des Schaltschrankes befestigt sein und von außen eine Darstellung auf die Oberfläche des Schaltschranks projizieren. Alternativ oder ergänzend kann der Projektor im Innern des Schaltschrankes angeordnet sein und von innen eine Darstellung auf eine zumindest abschnittsweise und zumindest teilweise transparente Oberfläche projizieren, so dass diese von außen sichtbar ist.

Für die Verwendung als Projektor hat sich insbesondere aufgrund seiner geringen Baugröße, seiner Auflösung und seines geringen Gewichts ein Pico-Projektor als vorteilhaft erwiesen. Dieser kann auf einfache Weise an der Außenseite oder im Innern des Schaltschrankes angeordnet und befestigt werden. Ferner hat sich ein Proximity Sensor als Näherungssensor als besonders günstig erwiesen, da hiermit zuverlässig Bewegungen der Finger, sowohl bekleidet mit einem Handschuh sowie ohne Handschuh, zuverlässig erkannt werden.

Ein Mikroprozessor kann dann die Signale aus den Proximity Sensoren verarbeiten und den Pico-Projektor sowie die elektrischen und/oder elektronischen Komponenten des Schaltschrankes oder des Stromrichters steuern.

Als besonders günstig hat sich der Einsatz des erfindungsgemäßen Schaltschrankes für einen Stromrichter erwiesen. Der Stromrichter umfasst eine Vielzahl von elektronischen Komponenten, wie beispielsweise Leistungshalbleiter, Schalter, Schütze, Sicherungen, Wandler wie Stromwandler und Spannungswandler, sowie Steuerung und Regelung. Diese Komponenten müssen beispielsweise während der Inbetriebnahme oder während der Wartung parametriert, d.h. an die Gegebenheiten vor Ort angepasst werden. Dazu wird der Betriebszustand ausgelesen oder geändert sowie Parameter einer oder mehrere Komponenten modifiziert.

Die Kosten für Gehäuse und Displays erhöhen bei bisher bekannten Schaltschränken die Material- und die Produktionskosten, insbesondere weil das Bedienpanel die Schutzart erfüllen muss, die in Industrieanwendungen gefordert wird. Durch den Einsatz des Schaltschrankes mit einem Projektor und einem Näherungssensor können die Materialkosten und Herstellkosten deutlich reduziert werden, da Panelgehäuse sowie Panel Display nicht mehr benötigt werden. Die Einbaukosten und der Aufwand des Einbaus reduzieren sich, da kein großes Loch in den Schrank gebohrt werden muss und daher Produktionsschritte entfallen.

Dadurch, dass der Schaltschrank keine ausschnitte mehr für das Display aufweist, kann dort auch keine Feuchtigkeit oder Wasser eindringen. Der Schaltschrank mit Projektor und Näherungssensor kann damit auf einfache Weise hohe Anforderungen gegenüber Schutz vor Wasser erfüllen.

Die Erfüllung der geforderten Schutzart (beispielsweise der IP-Klasse) ergibt sich automatisch, weil keine Panelgehäuse mehr benötigt werden. Die Displaygröße kann dabei auf einfache Weise an die Bedürfnisse oder Anforderungen des Kunden angepasst werden, da die Schrankoberfläche, insbesondere an der Vorderseite um ein Vielfaches größer ist als die bisher eingesetzten Displays. Die Displaygröße ist nur durch die Schrankgröße begrenzt, da die Bedienoberfläche auf die Schrankoberfläche ausgestrahlt wird.

Darüber hinaus ist das Bedienen des ausgestrahlten Bedienpanels, das als Darstellung auf der Oberfläche des Schaltschrankes sichtbar wird, problemlos auch mit Handschuhen möglich. Handschuhe werden oftmals während der Inbetriebsetzung vom Personal getragen, da diese bei einer Vielzahl von Inbetriebsetzungstätigkeiten hilfreich sind und vor Verletzungen schützen. Im Gegensatz zu einem Display kann die Bedienung des Schaltschrankes mit einem Proximity Sensor auch mit angezogenen Handschuhen erfolgen. Dabei hat es sich als besonders günstig erwiesen, während der Inbetriebsetzungsphase die projizierte Darstellung zu vergrößern, so dass die Bedienung mit Handschuhen sicher und zuverlässig erfolgen kann und Fehlbedienung aufgrund zu eng nebeneinanderliegenden Bedienelementen ausgeschlossen oder zumindest deutlich reduziert werden kann. Dadurch kann sich eine leicht änderbare Menüstruktur und Anordnung der virtuellen Tasten ergeben, was bei einem herkömmlichen Bedienfeld aufgrund der Displaygröße nicht einfach möglich ist.

Dabei hat es sich als besonders günstig erwiesen, wenn der Projektor derart ausgelegt ist, dass zumindest eine Seitenlänge der projizierten Darstellung mindestens 50%, insbesondere mindestens 95%, der entsprechenden Kantenlänge der Oberfläche beträgt. Damit ist insbesondere gemeint, dass die Breite der projizierten Darstellung mindestens 50%, insbesondere mindestens 95% der zur Verfügung stehenden Schrankbreite als Projektionsfläche ausnutzt.

Bei einer vorteilhaften Ausgestaltung sind der Projektor und/oder der Näherungssensor aktivierbar und deaktivierbar. Dabei hat es sich als vorteilhaft erwiesen, nur während Zeiten der Inbetriebsetzung oder der Wartung, den Projektor und/oder den Näherungssensor zu aktivieren. In den übrigen Zeiten, beispielsweise während des gewöhnlichen Betriebs des Schaltschrankes oder des Stromrichters, werden der Projektor und der Näherungssensors deaktiviert. Damit können Energiekosten gespart werden. Das Deaktivieren des Näherungssensors hat darüber hinaus den Vorteil, dass unbeabsichtigte oder unberechtigte Bedienungen ausgeschlossen werden können. In dieser Zeit kann der Projektor eine Darstellung projizieren, die den Status der Komponenten des Schaltschrankes oder des Stromrichters umfassen. Ebenso ist es möglich, nur ein Firmenlogo an die Oberfläche des Schaltschrankes zu projizieren. Insbesondere ein Firmenlogo mit bewegten Elementen kann mit Hilfe des Projektors projiziert werden. Insbesondere für Werbe- und Marketingzwecke kann dies zur Steigerung des Markenbewusstseins eingesetzt werden. Alternativ kann auch der Projektor zu diesen Zeiten deaktiviert sein, wenn keine Bedienung erforderlich oder zulässig ist. Dabei kann das Aktivieren und das Deaktivieren beispielsweise mittels eines Schalters im Innern des Schaltschranks erfolgen.

Bei einer weiteren vorteilhaften Ausgestaltung weist der Projektor und der Näherungssensor die gleiche Schutzart gegenüber Wasser, insbesondere die gleiche zweite Ziffer des IP-Codes, auf. Mit einem Schaltschrank kann ein nahezu beliebiger Schutz gegenüber Wasser ausgeführt werden. Dieser hängt in erstere Linie von der Beschaffenheit des Schaltschrankes, insbesondere von den Türen, und den Dichtungen ab. Dieser Schutz gegenüber Wasser kann somit deutlich günstiger realisiert werden als ein entsprechender Schutz eines Displays und einer Ausgestaltung des Displays, bei denen eine Berührung erkannt werden kann. Lediglich Projektor und Näherungssensor müssen den entsprechenden Schutz gegenüber Wasser aufweisen. Eine übliche Beschreibung des Schutzes gegenüber Wasser stellt die zweite Ziffer des IP-Codes dar. Je höher diese Ziffer ist, desto besser ist der Schutz gegenüber eindringendem Wasser. Falls Projektor und/oder Näherungssensor nicht über einen entsprechend hohen Schutz gegenüber Wasser verfügen, können diese Komponenten oder zumindest eine dieser Komponenten in einem entsprechend dichten Gehäuse angeordnet werden, wobei das Gehäuse eine zum Teil durchsichtige Oberfläche aufweist.

Bei dieser Ausgestaltung der Erfindung ist ein leichtes Reinigen des Schaltschrankes oder des Stromrichters beispielsweise mit Hilfe eines Hochdruckreinigers auf einfache und sichere Weise möglich.

Im Folgenden wird die Erfindung anhand der in den Figuren dargestellten Ausführungsbeispiele näher beschrieben und erläutert. Es zeigen:
- FIG 1: ein Schaltschrank und
- FIG 2: ein Schaltschrank mit einer Darstellung während der Inbetriebnahme.

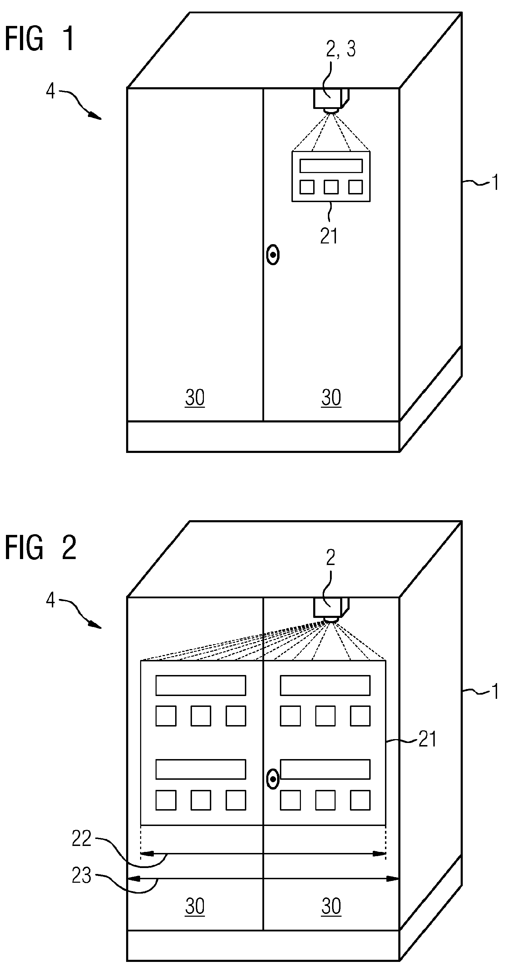

FIG 1 zeigt einen Schaltschrank 1, bei dem es sich um einen Stromrichter 4 handeln kann. Im oberen Teil des Schaltschrankes 1 ist eine Einheit aus Projektor 2 und Näherungssensor 3 angeordnet. Es hat sich als günstig erwiesen, Projektor 2 und Näherungssensor 3 in unmittelbarer Nähe zu platzieren, da damit sichergestellt ist, dass Berührungen im Bereich der projizierten Darstellung 21 mitte3ls des Näherungssensors 3 erfassbar sind und nicht durch andere Objekte verschattet sind. Projektor 2 und Näherungssensor 3 können alternativ auch an getrennten Orten angebracht sein, um eine Wechselwirkung zwischen diesen Geräten zuverlässig zu verhindern. Die Anordnung erfolgt in vorteilhafter Weise im oberen Teil des Schaltschrankes 1 um eine Beschädigung von Projektor 2 und/oder Näherungssensor 3 durch Personen, Fahrzeuge wie beispielsweise Hubwagen oder Stapler, oder sonstigen Tätigkeiten während Inbetriebsetzung oder Wartung zu vermeiden. Der Projektor 2 projiziert eine Darstellung 21 auf die Oberfläche des Schaltschrankes 1. Dabei wird vorzugsweise die Vorderseite des Schaltschrankes 1 genutzt, die üblicherweise mindestens eine Schaltschranktür 30 umfasst, von der ein Zugang zu den Komponenten im Innern des Schaltschrankes 1 oder des Stromrichters 4 möglich ist. Die in FIG 1 dargestellte projizierte Darstellung 21 entspricht im Wesentlichen von der Größe her einem Display. Diese Größe kann sich für den normalen Betrieb des Schaltschrankes 1, außerhalb der Inbetriebsetzung, im besonderen Maße eignen, da die Bedienung in diesem Fall vorzugsweise mit der unbedeckten Hand, bzw. mit unbedeckten Fingern erfolgt und somit sehr zielgenau auf engem Raum der Darstellung 21 erfolgen kann.

FIG 2 zeigt ein weiteres Ausführungsbeispiel eines Schaltschrankes 1, bei dem sich die Darstellung 21 über einen Großteil der vorderseitigen Oberfläche erstreckt. Diese große Abmessung der Darstellung 21 eignet sich im Besonderen für den Zeitraum der Inbetriebsetzung. In diesem Zeitraum erfolgt die Bedienung des Schaltschrankes 1 oder des Stromrichters 4 oftmals mit Handschuhen, mit denen eine Bedienung eng beieinander liegender Schaltflächen nicht oder nur sehr schwierig ermöglichen. Durch die große Darstellung 21 können die berührbaren Elemente mit einem so großen Abstand zueinander angeordnet werden, dass eine zielsichere Bedienung auch mit Handschuhen möglich ist. Ebenso ist es möglich, eine Vielzahl von Informationen, wie beispielsweise Zeitverläufe, die für die Inbetriebsetzung relevant sind, gleichzeitig zu projizieren. Ein zeitaufwändiges Umschalten zwischen unterschiedlichen Darstellungen kann entfallen. Ebenso ist es während der Inbetriebsetzung möglich, Zusammenhänge und Abhängigkeiten zu erkennen und damit Fehler bei der Inbetriebsetzung und/oder Montage schnell aufdecken und beseitigen zu können.

Falls die Vorderseite des Schaltschrankes 1 zwei Türen aufweist, kann der Bereich der sich ergebenden Fuge zwischen den Türen bei der Darstellung 21 von Bedienelementen ausgenommen werden, um die Bedienung einfach handhabbar zu gestalten. Ebenso kann auf die Darstellung von Informationen in diesem Bereich der Fuge verzichtet werden, um die Lesbarkeit aller projizierten Informationen zu gewährleisten. Alternativ kann der Schaltschrank mit nur einer Tür ausgestattet sein, so dass sich keine Fuge ergibt und die gesamte Breite der Vorderseite für die Projektion von Informationen und Bedienelementen zur Verfügung steht.

Eine Seitenlänge 22 der projizierten Darstellung, die in diesem Fall waagrecht über die Breite des Schaltschrankes 1 bzw. Stromrichters 4 verläuft, erstreckt sich über einen Großteil der Verfügung stehenden, entsprechenden Kantenlänge 23, die in diesem Fall der Breite des Schaltschrankes 1 entspricht. Die der Seitenlänge 22 entsprechende Kantenlänge 23 ist die Strecke, die auf der Oberfläche parallel zu der Seitenlänge 22 verläuft.

Zusammenfassend betrifft die Erfindung einen Schaltschrank. Zur Verbesserung des Schaltschrankes wird vorgeschlagen, dass der Schaltschrank einen Projektor und einen Näherungssensor aufweist, wobei der Projektor derart am Schaltschrank befestigt ist, dass mittels des Projektors eine Darstellung an eine Oberfläche des Schaltschranks projizierbar ist, wobei der Näherungssensor derart am Schaltschrank befestigt ist, dass eine Berührung der Oberfläche des Schaltschranks im Bereich der Darstellung mittels des Näherungssensors erkennbar ist. Die Erfindung betrifft weiter einen Stromrichter mit einem solchen Schaltschrank. Ferner betrifft die Erfindung ein Verfahren zum Betrieb eines solchen Schaltschrankes oder eines solchen Stromrichters, wobei mittels des Projektors eine Darstellung an die Oberfläche des Schaltschranks projiziert wird, wobei mittels einer Berührung oder einer Sequenz von Berührungen von Teilen der Oberfläche des Schaltschrankes im Bereich der Darstellung eine oder mehrere Eingabeinformationen aufgenommen werden.

## Patentansprüche

1. Schaltschrank (1) umfassend
- einen Projektor (2) und
- einen Näherungssensor (3),
wobei der Projektor (2) derart am Schaltschrank (1) befestigt ist, dass mittels des Projektors (2) eine Darstellung (21) an eine Oberfläche des Schaltschranks (1) projizierbar ist, wobei der Näherungssensor (3) derart am Schaltschrank (1) befestigt ist, dass eine Berührung der Oberfläche des Schaltschranks (1) im Bereich der Darstellung (21) mittels des Näherungssensors (3) erkennbar ist.

2. Schaltschrank (1) nach Anspruch 1, wobei der Projektor (2) und/oder der Näherungssensor (3) aktivierbar und deaktivierbar sind.

3. Schaltschrank (1) nach einem der Ansprüche 1 oder 2, wobei der Projektor (2) und der Näherungssensor (3) die gleiche Schutzart gegenüber Wasser, insbesondere die gleiche zweite Ziffer des IP-Codes, aufweisen.

4. Schaltschrank (1) nach einem der Ansprüche 1 bis 3, wobei die Größe der projizierbaren Darstellung (21) in Abhängigkeit von Arbeiten am Schaltschrank (1) veränderbar ist.

5. Stromrichter (4) mit einem Schaltschrank (1) nach einem der Ansprüche 1 bis 4.

6. Verfahren zum Betrieb eines Schaltschrankes (1) nach einem der Ansprüche 1 bis 4 oder eines Stromrichters (4) nach Anspruch 5, wobei mittels des Projektors (2) eine Darstellung (21) an die Oberfläche des Schaltschranks (1) projiziert wird, wobei mittels einer Berührung oder einer Sequenz von Berührungen von Teilen der Oberfläche des Schaltschrankes (1) im Bereich der Darstellung (21) eine oder mehrere Eingabeinformationen aufgenommen werden.

7. Verfahren zum Betrieb nach Anspruch 6, wobei die Darstellung (21) eine Information über mindestens einen Betriebsparameter und/oder über mindestens einen Betriebszustand umfasst, wobei mittels der Berührung oder der Sequenz von Berührungen der Betriebsparameter oder der Betriebszustand geändert wird.

8. Verfahren zum Betrieb nach einem der Ansprüche 6 oder 7, wobei zur Inbetriebsetzung und/oder Wartung der Projektor und der Näherungssensor aktiviert werden.

9. Verfahren zum Betrieb nach einem der Ansprüche 6 bis 8, wobei die Größe der projizierten Darstellung (21) in Abhängigkeit von Arbeiten am Schaltschrank (1) verändert wird.

10. Verfahren zum Betrieb nach einem der Ansprüche 5 bis 9, wobei abhängig von den Arbeiten am Schaltschrank (1), insbesondere bei der Inbetriebsetzung, der Projektor (2) derart betrieben wird, dass zumindest eine Seitenlänge (22) der projizierten Darstellung mindestens 95% der entsprechenden Kantenlänge (23) der Oberfläche beträgt.
